# EUROPEAN PATENT SPECIFICATION

(11) **EP 3 246 628 B1**
(45) Date of publication and mention of the grant of the patent: **10.03.2021**
(21) Application number: 17171711.9
(22) Date of filing: 18.05.2017
(51) Int. Cl.: F23K 5/04, F23R 3/06, F23R 3/28, F02C 7/228, F02C 7/264, F02C 7/236, F02C 7/266, F23R 3/30, F23R 3/32, F23R 3/34

(54) **SMALL TURBINE ENGINE WITH AN IGNITION SYSTEM**
KLEINTURBINENTRIEBWERK MIT EINEM ZÜNDUNGSSYSTEM
PETITE TURBOMACHINE DOTÉE D'UN SYSTÈME D'ALLUMAGE

(30) Priority: 19.05.2016 CZ 20160296
(43) Date of publication of application: 22.11.2017
(73) Proprietor: Prvni brnenska strojirna Velka Bites, a.s., 595 01 Velka Bites (CZ); Katolicky, Zdenek, 595 01 Velka Bites (CZ)
(72) Inventor: Katolicky, Zdenek, 595 01 Velka Bites (CZ)
(74) Representative: Musil, Dobroslav

(56) References cited:
- US-A- 2 667 742
- US-A- 2 818 704
- US-A- 3 611 717
- US-A- 4 121 419
- US-A- 4 204 404
- US-A1- 2008 209 910
- US-A1- 2015 369 489
- Arthur Lefebvre: "Gas Turbine Combustion" In: "Gas turbine combustion : alternative fuels and emissions", 26 April 2010 (2010-04-26), CRC Press, Boca Raton, Fla. [u.a.], XP055646223, ISBN: 978-1-4200-8604-1

## Description

### Technical field

The invention relates to a small turbine engine with an ignition system comprising a combustion chamber connectable to a fuel-air mixture supply, the combustion chamber being provided with an ignition system with a glow plug.

### Background art

To start small turbine engines, the pre-heating of the space of the combustion chamber is used to ignite the main fuel by means of gas fuel, fed by a separate manifold from a pressure vessel through a starter valve. Before the heating is completed, the main fuel is fed into the evaporating tubes inside the combustion chamber, which continues burning by itself and the feed of the starting gas fuel is interrupted.

The second option is direct ignition of the main fuel by means of a ceramic glow plug, in which the main fuel is fed to the plug by a branch line from the main fuel manifold through a starter valve.

Large turbine engines use for starting either torch igniters with a starter nozzle and a high-energy low-voltage plug, or they use ignition of the fuel-air mixture with a high-energy spark in the area of fuel properly sprayed by the main nozzles at sufficient fuel pressure.

The disadvantage of the above-mentioned known systems of starting turbine engines, especially small turbine engines, is the necessity to use two types of fuel in the case of an auxiliary gas variant. For a ceramic plug system, ignition of the fuel is unreliable or even impossible at temperatures below the freezing point and at higher flight speeds. In addition, with both variants of starting it takes a relatively long time for the engine to reach the operating mode.

The solutions used to ignite fuel-air mixtures in large turbine engines are not applicable to small turbine engines with evaporating tubes, apparently for dimensional, weight and economic reasons.

The aim of the invention is to eliminate or at least minimize the drawbacks of the background art, especially to reduce the time required to reach the operating mode of the engine, improve or allow starting at low temperatures and temperatures below the freezing point and at higher flight speeds. Gas turbines with ignition systems are known in the prior art from US2015/0369489, US3611717, US3668869, US2008/0209910 and US2667742.

### Principle of the invention

The aim of the invention is achieved by a small turbine engine according to claim 1.

The invention significantly extends the possibilities of starting small turbine engines in terms of flight velocity, low or minus ambient temperatures and altitudes and enables to start the engines in any position relative to the ground. A high-angle spray starting bypass nozzle ensures combustion of the fuel-air mixture in a large part of the combustion chamber in both the longitudinal and circumferential directions and thus allows the rapid and effective start of the engine into the operating mode, for example, in the case of the engine with evaporating tubes, it ensures rapid heating of the evaporating tubes before opening the main fuel supply.

### Description of drawings

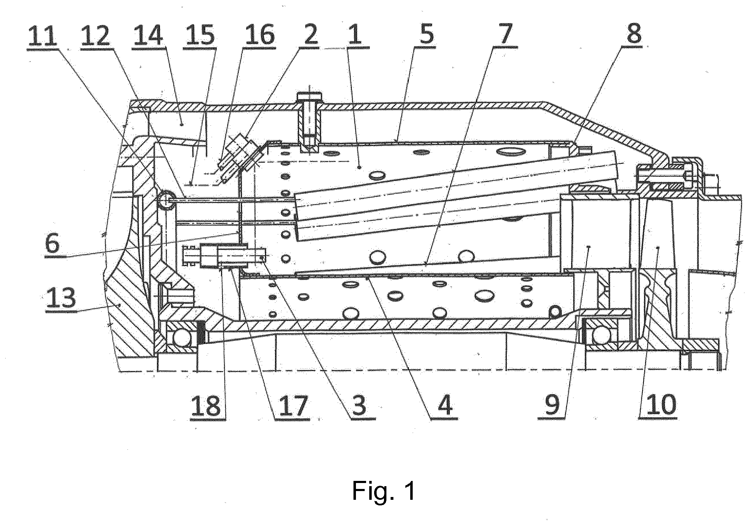

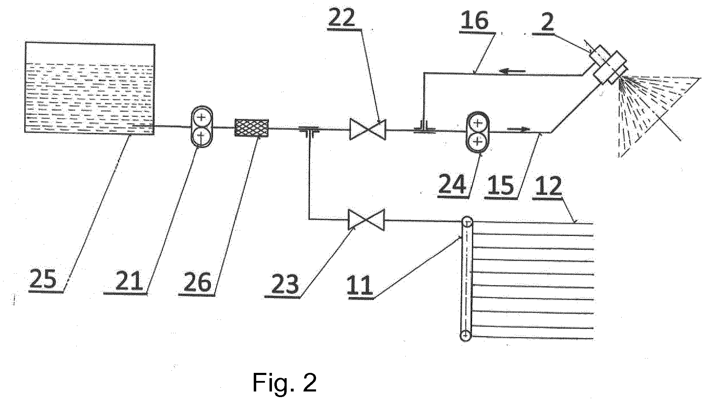

The invention is schematically represented in the drawing, where Fig. 1 shows a cross-sectional view of a small turbine engine with an ignition system according to the invention and Fig. 2 shows an arrangement of the fuel system of the small turbine engine according to the invention.

### Example of embodiment

The invention will be described with reference to an exemplary embodiment of a small turbine engine with an annular combustion chamber **1.** The combustion chamber **1** comprises an outer shell **5,** an inner shell **4** and a front **6.** Inside the combustion chamber **1** fuel evaporating tubes **7** are arranged along the circumference of the combustion chamber **1.** In the illustrated embodiment, the fuel evaporating tubes **7** are mounted with their rear ends, in the left-to-right direction, in an annular carrier **8.** The outlet of the exhaust gas from the combustion chamber **1** is joined by a turbine distribution wheel **9** and a turbine action wheel **10,** which constitute the outlet portion of the engine and which are rotatably mounted in a known manner on the structure of the engine.

The main fuel is fed into the combustion chamber **1** from a manifold **11** through capillary tubes **12** to the evaporating tubes **7,** through which the air is supplied to the inner space of the combustion chamber **1** in a known manner from an axial diffuser **14.** The air flows into the combustion chamber **1** also through the holes in the walls of the combustion chamber **1.** An air compressor **13** is rotatably mounted at the inlet to the engine, whereby the air, having passed through the compressor **13,** flows into the space of the engine with the combustion chamber **1** through the axial diffuser **14.** The compressor **13** is coupled to an unillustrated start-up device, e.g. an electromotor.

The combustion chamber **1** is provided with at least one bypass nozzle **2** and spaced therefrom by at least one glow plug **3.** Both the bypass nozzle **2** and the glow plug **3** are preferably situated in the area of the inner space of the combustion chamber **1,** into which lead the evaporating tubes **7.** In the illustrated embodiment, both the bypass nozzle **2** and the glow plug **3** are situated at the front **6** of the combustion chamber **1,** or the bypass nozzle **2** is arranged in the inclined surface of the front **6** of the combustion chamber **1** or in another suitable part of the combustion chamber **1** at the entrance of the evaporating tubes **7** to the combustion chamber **1.**

The starter bypass nozzle **2** is with its inlet connected to the fuel supply pipe line **15,** whereby it is connected to the suction of the starting pump **24** with its bypass outlet by means of a bypass pipe **16.** The starter bypass nozzle **2** is arranged in such a manner that most of the amount of the fuel delivered by means of the fuel supply pipe line **15** returns through the bypass pipe **16** to the suction of the starting pump **24.** A smaller portion of the fuel is by means of the starter bypass nozzle **2,** which has a fuel spray angle in the range from 60° to 110°, ideally 90°, injected into the combustion chamber **1,** where fuel properly sprayed is formed. The amount of the injected fuel is determined by the setting of the main fuel pump **21,** which dispenses the fuel into the engine and hence also into the starting fuel pump **24.**

The starter bypass nozzle **2** has a large injection opening as well as a large bypass opening, so that there is no risk of blockage, and low fuel pressure is sufficient for the nozzle **2** to function.

The ceramic glow plug **3,** which ignites the fuel-air mixture, is mounted in the body of the combustion chamber **1** in the illustrated example of embodiment by means of a cooling housing **17** with an opening **18** situated in front of the combustion chamber, so that the air from the axial diffuser **14** flows through this opening **18** to provide the cooling of the glow plug **3.** Preferably, the ceramic glow plug **3** is located in such a manner that the droplets of the fuel from the starting bypass nozzle **2** fall on it.

A fuel tank **25** is assigned to the engine, being connected to the main fuel pump **21,** from which the fuel is further fed through a fuel filter **26,** behind which the fuel manifold is divided into branches - a starting fuel branch connected through a starting solenoid valve **22** and an operating fuel branch connected through an operating solenoid valve **23.**

Behind the starting solenoid valve **22** the fuel is fed to the inlet of the starting pump **24,** whose outlet is connected by means of the fuel supply pipeline **15** to the inlet of the starting bypass nozzle **2.** The outlet of the bypass nozzle is connected **2** by means of the bypass pipe **16** to the starting fuel branch between the starting solenoid valve **22** and the starting pump **24,** i.e., it is connected to the suction of the starting pump **24.**

The operating fuel branch leads beyond the operating solenoid valve **23** to the manifold **11** and further on to the capillary tubes **12** and to the evaporating tubes **7** in the combustion chamber **1.** The fuel is delivered by this manifold from the main pump **21** to the evaporating tubes **7** and into the combustion chamber **1.**

A small turbine engine with an ignition system is operated in such a manner that after the start-up of the engine at first the compressor **13** starts to rotate, thereby forcing the air into the engine. The fuel is injected with the starter bypass nozzle **2** into the front of the combustion chamber **1**, where it is mixed with the air passing through the openings in the walls of the combustion chamber **1** and through the evaporating tubes **7.** The mixture is ignited with the ceramic glow plug **3,** whereby more fuel is injected with the starter bypass nozzle **2.** Due to properly sprayed fuel, enabled especially by a large fuel spray angle and a low fuel spray pressure, a large volume of the combustion chamber is affected by the fuel spray **1** both in the longitudinal and circumferential directions, which leads to a rapid preheating of the evaporating tubes **7,** so that it is possible to open and close the fuel supply to the evaporating tubes **7** earlier in comparison to the background art, and the engine is rapidly accelerated to the operating mode. Once the desired parameters of the engine operation have been reached, e.g., the set limit of the revolutions, the starting solenoid valve **22** is closed and the starting pump **24,** the glow plug **3** and the starter bypass nozzle **2** are disconnected, and the fuel is henceforth fed to the engine only by means of the operating solenoid valve **23** through the manifold **11** and the capillary tubes **12** to the evaporating tubes **7.**

The invention is not limited only to turbine engines with evaporating tubes, but it can be also used in other turbine engines.

## Claims

1. A small turbine engine with an ignition system, which comprises a combustion chamber (1) connectable to the supply of fuel and air, whereby the combustion chamber (1) is provided with an ignition system with a glow plug (3), wherein the combustion chamber (1) is provided with at least one starter bypass nozzle (2) having a fuel spray angle in the range between 60° and 110° and a starting pump (24), where by the starter bypass nozzle (2) is connected through the starting pump (24) to the fuel supply to the engine and wherein the fuel supply to the engine comprises a main pump (21), behind which the fuel manifold is divided into two branches - a starting fuel branch with a starting solenoid valve (22) and an operating fuel branch with an operating solenoid valve (23), whereby behind the starting solenoid valve (22) the fuel is led to the inlet of the starting pump (24), whose outlet is by a fuel supply pipe line (15) connected to the inlet of the starter bypass nozzle (2), whose outlet is by a bypass pipe (16) connected to the starting fuel branch between the starting solenoid valve (22) and the starting pump (24).

2. The small turbine engine according to claim 1, **characterized in that** the combustion chamber is an annular combustion chamber with a shell and the starter bypass nozzle (2) and the glow plug (3) are attached to the shell of the annular combustion chamber (1).

3. The small turbine engine according to claim 1 or 2, **characterized in that** the starter bypass nozzle (2) is located at the front (6) of the combustion chamber (1).

4. The small turbine engine according to claim 1, **characterized in that** the operating fuel branch behind the operating solenoid valve (23) leads to a fuel distribution manifold (11) and then to capillary tubes (12) and to evaporating tubes (7) in the combustion chamber (1).

5. The small turbine engine according to claim 1 or 4, **characterized in that** the main pump (21) is configured to determine the amount of the fuel injected at the time of the engine start and the starting pump (24) is configured to determine the amount of the fuel entering the inlet of the starter bypass nozzle (2).

## Patentansprüche

1. Kleiner Turbinenmotor mit einem Zündungssystem, der eine Verbrennungskammer (1) aufweist, die an eine Brennstoff- und Luftzufuhr anschließbar ist, wobei die Verbrennungskammer (1) ein Zündungssystem mit einer Glühkerze (3) aufweist, wo die Verbrennungskammer (1) mindestens eine Startumlenkdüse (2) mit einem Brennstoffversprühungswinkel im Bereich von 60° bis 110° und eine Startpumpe (24) aufweist, wobei die Startumlenkdüse (2) über die Startpumpe (24) an eine Brennstoffzufuhr in Motor angeschlossen ist, und wo die Brennstoffzufuhr in Motor eine Hauptpumpe (21) aufweist, hinter der die Brennstoffverteilung in zwei Zweige geteilt wird - Startbrennstoffzweig mit einem elektromagnetischen Startventil (22) und Betriebsbrennstoffzweig mit einem elektromagnetischen Betriebsventil (23), wobei hinter dem elektromagnetischen Startventil (22) der Brennstoff in einen Eintritt der Startpumpe (24) geführt wird, deren Austritt durch eine Brennstoffzuleitung (15) an einen Eintritt der Startumlenkdüse (2) angeschlossen ist, deren Austritt durch eine Umlenkrohrleitung (16) an einen Startbrennstoffzweig zwischen dem elektromagnetischen Startventil (22) und der Startpumpe (24) angeschlossen ist.

2. Kleiner Turbinenmotor nach dem Anspruch 1, **dadurch gekennzeichnet, dass** die Verbrennungskammer eine Ringverbrennungskammer (1) mit einem Mantel ist, wobei die Startumlenkdüse (2) und die Glühkerze (3) auf dem Mantel der Ringverbrennungskammer (1) befestigt sind.

3. Kleiner Turbinenmotor nach dem Anspruch 1 oder 2, **dadurch gekennzeichnet, dass** die Startumlenkdüse (2) in der Stirn (6) der Verbrennungskammer (1) angebracht ist.

4. Kleiner Turbinenmotor nach dem Anspruch 1, **dadurch gekennzeichnet, dass** der Betriebsbrennstoffzweig hinter dem elektromagnetischen Betriebsventil (23) in eine Brennstoffverteilung (11) und weiter in Kapillarröhrchen (12) und in Verdampfungsrohre (7) in der Verbrennungskammer (1) führt.

5. Kleiner Turbinenmotor nach dem Anspruch 1 oder 4, **dadurch gekennzeichnet, dass** die Hauptpumpe (21) zur Bestimmung der Menge eines in dem Zeitpunkt des Motorstarts eingespritzten Brennstoffes angepasst ist und die Startpumpe (24) zur Bestimmung der Menge eines in den Eintritt der Startumlenkdüse (2) eintretenden Brennstoffes angepasst ist.

## Revendications

1. Petit turbomoteur avec système d'allumage comprenant une chambre de combustion (1) qui peut être connectée à l'arrivée du carburant et de l'air, tandis que la chambre de combustion (1) est munie d'un système d'allumage avec une bougie de préchauffage (3), où la chambre de combustion (1) est munie d'au moins une buse de dérivation de démarrage (2) avec angle d'arrosage de carburant entre 60° et 110°, et d'une pompe de démarrage (24), tandis que la buse de dérivation de démarrage (2) est connectée, à l'aide de la pompe de démarrage (24), à l'arrivée du carburant dans le moteur, où l'arrivée du carburant dans le moteur comprend la pompe principale (21), derrière laquelle le conduit de carburant est divisé en deux branches - branche carburant de démarrage avec électrovanne (22) et branche de service avec électrovanne de (23), tandis que derrière l'électrovanne de démarrage (22) le carburant est conduit dans l'entrée de la pompe de démarrage (24) dont la sortie est connectée, par le conduit d'arrivée du carburant (15), à l'entrée de la buse de dérivation de démarrage (2), dont la sortie est connectée, à l'aide de conduit de dérivation (16), à la branche carburant de démarrage entre l'électrovanne de démarrage (22) et la pompe de démarrage (24).

2. Petit turbomoteur selon la revendication 1, **caractérisé en ce que** la chambre de combustion est une chambre de combustion annulaire (1) avec enveloppe, tandis que la buse de dérivation de démarrage (2) et la bougie de préchauffage (3) sont fixées à l'enveloppe de la chambre de combustion annulaire (1).

3. Petit turbomoteur selon la revendication 1 ou 2, **caractérisé en ce que** la buse de dérivation de démarrage (2) se situe à l'avant (6) de la chambre de combustion (1).

4. Petit turbomoteur selon la revendication 1, **caractérisé en ce que** la branche de carburant de service derrière l'électrovanne de service (23) est guidée dans la distribution (11) du carburant et ensuite dans les tubes capillaires (12) et les tuyaux d'évaporation (7) dans la chambre de combustion (1).

5. Petit turbomoteur selon la revendication 1 ou 4, **caractérisé en ce que** la pompe principale (21) est adaptée pour déterminer la quantité du carburant injecté lors du démarrage du moteur et la pompe de démarrage (24) est adaptée pour déterminer la quantité du carburant qui arrive dans l'entrée de la buse de dérivation de démarrage (2).
